# EUROPEAN PATENT APPLICATION

(11) **EP 4 258 542 A1**
(43) Date of publication of application: **11.10.2023**
(21) Application number: 22814788.0
(22) Date of filing: 13.03.2022
(51) Int. Cl.: H02S 30/10, B29C 70/54, B29C 70/52, B26D 9/00

(54) **COMPOSITE MATERIAL FRAME PROFILE, AND SOLAR COMPONENT FRAME AND MANUFACTURING METHOD THEREFOR**

(30) Priority: 04.06.2021 CN 202110623266; 04.06.2021 CN 202121241850 U
(71) Applicant: Zhejiang Deyilong Technology Co., Ltd., Huzhou, Zhejiang 313011 (CN)
(72) Inventor: FENG, Yi, Huzhou, Zhejiang 313011 (CN); HOU, Heng, Huzhou, Zhejiang 313011 (CN)
(74) Representative: karo IP
(86) International application number: PCT/CN2022/080534
(87) International publication number: WO 2022/252740

(57) **Abstract**

Disclosed are a composite material frame profile, solar energy module frame and it's manufacturing method thereof, where the composite material frame profile includes a profile body and a plug-in cavity that is arranged on the profile body and is configured for plug-in connection with a toothed corner connector, a corner connector plug-in part is arranged on the inner surface of the side wall of the plug-in cavity in a corner connector mounting area of the frame profile, and the corner connector plug-in part can be a plurality of bumps or bosses; the side wall of the plug-in cavity is a side wall containing a fiber fabric; and the bumps or the bosses are configured for inserting and fixing the toothed corner connector. The mechanical strength of the corner connector mounting area of the frame profile can be well enhanced through fiber fabrics, so that the mechanical strength of the bumps or the bosses is enhanced, and the quick plug-in connection with the toothed corner connector is realized.

## Description

### TECHNICAL FIELD

The present invention relates to a profile, in particular to a composite material frame profile, solar energy module frame and it's manufacturing method thereof.

### BACKGROUND

The frame profile prepared by the composite material pultrusion process has a relatively weak lateral strength. The existing method for plug-in connection of toothed corner connectors is usually mechanical clamping achieved through interference fit or convex-concave fit, resulting in that fast plug-in connection cannot be performed.

### SUMMARY

In order to solve the above technical problems, the present invention proposes a composite material frame profile, solar energy module frame and it's manufacturing method thereof.

In order to realize the above objective, the present invention provides a technical solution as follows:
In one aspect, the present invention discloses a composite material frame profile, including: a profile body and a plug-in cavity that is arranged on the profile body and is configured for plug-in connection with a toothed corner connector, a corner connector plug-in part is arranged on the inner surface of the side wall of the plug-in cavity in a corner connector mounting area of the frame profile, and the corner connector plug-in part can be a plurality of bumps or bosses;
the side wall, on which the bumps or the bosses are distributed, of the plug-in cavity is a side wall containing a fiber fabric; and
the bumps or the bosses are configured for inserting and fixing the toothed corner connector.

The composite material frame profile of the present invention has the following beneficial effects: by use of the fiber fabric in the present invention, the mechanical strength of the corner connector mounting area of the frame profile can be well enhanced, so that the mechanical strength of the bumps or the bosses is enhanced, and the quick plug-in connection with the toothed corner connector is realized.

On the basis of the above technical solution, the following improvements can be made:
As a preferred solution, each bump or boss includes a through hole penetrating the side wall of the plug-in cavity, and protruding thorns or flanges distributed inwardly extending from the edge of the through hole.

The above preferred solution is adopted to prepare the bumps or the bosses by punching, the preparation process is simple, and the fiber fabric can reinforce the bumps or the bosses, and the through hole will not crack during punching.

As a preferred solution, the through hole is a tapered hole, and the aperture size of the through hole gradually decreases along the direction extending from the outer surface of the side wall of the plug-in cavity to the inner surface thereof.

According to the above preferred solution, the through hole of the tapered hole will not crack during punching.

As a preferred solution, resin is infiltrated into the cavity of the through hole of each bump or boss, and the resin is cured to form a resin block.

According to the above preferred solution, the resin is used to reinforce the bumps or the bosses to improve the force-bearing effect.

As a preferred solution, fiber fabrics are distributed inside the profile body close to its outer surface.

The above preferred solution is adopted to increase the transverse mechanical strength of the profile body.

As a preferred solution, fiber fabrics are distributed inside the side wall of the plug-in cavity with the bumps or bosses near its inner surface and outer surface.

The above preferred solution is adopted to further reinforce the bumps or the bosses.

As a preferred solution, a mounting edge extending outward is provided on the bottom surface of the profile body, and a fiber fabric is distributed along the length direction of the mounting edge near the outer surface and a middle part of the mounting edge.

According to the above preferred solution, the fiber fabric is used to increase the transverse mechanical strength of the mounting edge.

As a preferred solution, the fiber fabric distributed in the side wall of the plug-in cavity close to its inner surface extends to the middle part of the inside of the mounting edge and is distributed along the length direction of the mounting edge. This middle part refers to the portion between the upper and lower outer surfaces of the mounting edge where the fiber fabrics are distributed.

According to the above preferred solution, a piece of fabric can simultaneously reinforce the mounting edge and the wall of the plug-in cavity. While simplifying the preparation process of the frame profile, the present invention improves the effect of reinforcing the mounting edge and the wall of the plug-in cavity.

As a preferred solution, a mounting edge extending outward is provided on the bottom surface of the profile body, and a fiber fabric is distributed along the length direction of the mounting edge on the outer surface and inside of the mounting edge.

According to the above preferred solution, the fiber fabric is used to increase the transverse mechanical strength of the mounting edge.

As a preferred solution, the fiber fabric coated on the inner surface of the side wall of the plug-in cavity extends to the inside of the mounting edge and is distributed along the length direction thereof.

According to the above preferred solution, a piece of fabric can simultaneously reinforce the mounting edge and the wall of the plug-in cavity. While simplifying the preparation process of the frame profile, the present invention improves the effect of reinforcing the mounting edge and the wall of the plug-in cavity.

As a preferred solution, the fiber fabric is a glass fiber mat or a piece of glass fiber cloth.

According to the above preferred solution, the type of the fiber fabric is selected according to the specific situation.

In a further aspect, the present invention further discloses a solar energy module frame, including any of the above composite material frame profiles and toothed corner connectors, the toothed corner connector is inserted into the plug-in cavity of two adjacent frame profiles, and all or part of the bumps or the bosses are arranged between two adjacent teeth of a toothed corner connector.

As a preferred solution, after the toothed corner connector is inserted into the composite material frame profile, the pulling force of the toothed corner connector and the composite material frame profile is greater than 150 N.

In a further aspect, the present invention further discloses a manufacturing method for the solar energy module frame, and the method includes the following steps:
S1: using a composite material pultrusion device to prepare a composite material frame profile containing fiber fabrics on at least one side wall of the plug-in cavity;
S2: using a cutting device to cut the composite material frame profile to a suitable length;
S3: using a punching device to punch a plurality of bumps or bosses on the surface of the side wall of the plug-in cavity in the corner connector mounting area of each section of the composite material frame profile;
S4: using the method of dispensing or brushing to infiltrate the resin into the cavity of the through hole of each bump or boss; and
S5: inserting a toothed corner connector between two adjacent composite material frame profiles, and putting all or part of the bumps or the bosses between two adjacent teeth of the toothed corner connector to form a group frame.

### BRIEF DESCRIPTION OF THE DRAWINGS

To describe the technical solution in the embodiments of the present invention more clearly, the accompanying drawings required for describing the embodiments are briefly described below. It should be understood that the following accompanying drawings show merely some embodiments of the present invention, and therefore it should not be construed as a limitation to the scope. Those of ordinary skill in the art can also derive other accompanying drawings from these accompanying drawings without making inventive efforts.
FIG. 1 is a sectional view of a composite material frame profile (fiber fabric distribution) provided by an embodiment of the present invention.
FIG. 2 is a schematic diagram of the structure of a junction between two adjacent composite material frame profiles provided by an embodiment of the present invention.
FIG. 3 is a partial enlarged view of a bump or a boss provided by an embodiment of the present invention.
FIG. 4 is a schematic diagram of the structure of an inner side wall of a plug-in cavity of the composite material frame profile provided by an embodiment of the present invention.

Reference numerals: 1-profile body, 11-plug-in cavity, 12-inner side wall of plug-in cavity, 2-mounting edge, 3-toothed corner connector, 4-bump or boss, 41-through hole, 42-protruding thorn or flange, 5-resin block, 6-fiber fabric.

### DETAILED DESCRIPTION OF THE EMBODIMENTS

The preferred embodiments of the present disclosure will be described in detail below with reference to the accompanying drawings.

The technical solutions in the embodiments of the present invention will be clearly and completely described below in combination with the accompanying drawings in the embodiments of the present invention. Apparently, the embodiments described are merely some rather than all of the embodiments of the present invention. Based on the described embodiments of the present invention, all other embodiments acquired by those of ordinary skill in the art without making creative efforts fall within the protection scope of the present invention.

The expression of "including" element is an "open-ended" expression, and the "open-ended" expression only refers to the existence of corresponding components, and should not be interpreted as exclusion of additional components.

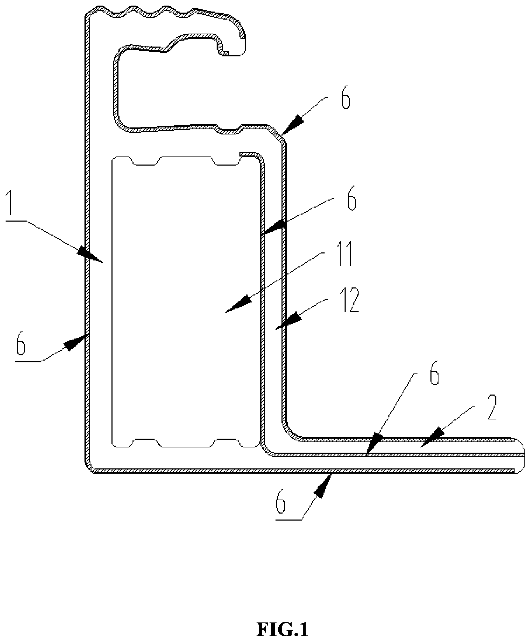

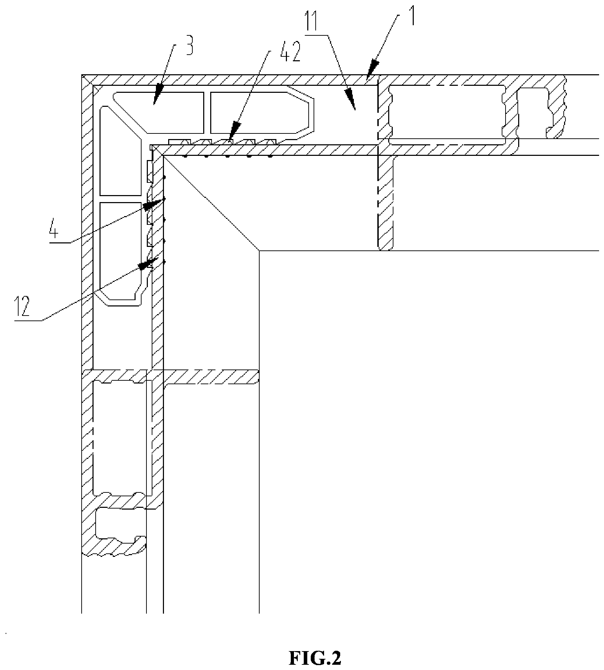

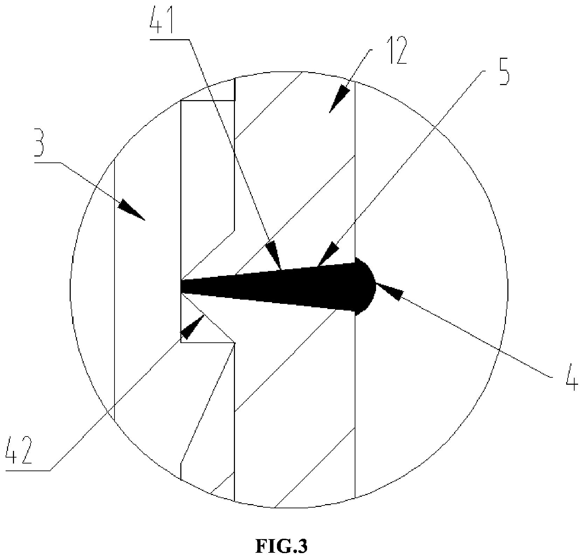

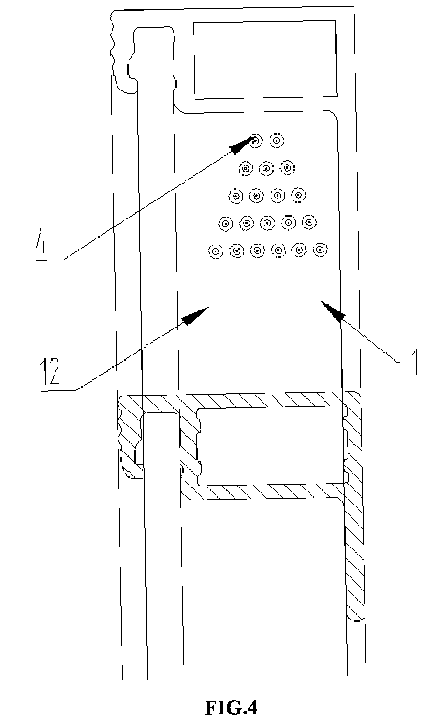

In order to achieve the objective of the present invention, in some embodiments of a composite material frame profile, solar energy module frame and it's manufacturing method thereof, as shown in FIGs. 1-4, the composite material frame profile includes: a profile body 1 and a plug-in cavity 11 that is arranged on the profile body 1 and is configured for plug-in connection with a toothed corner connector 3, a corner connector plug-in part is arranged on the inner surface of the inner side wall 12 of the plug-in cavity in a corner connector mounting area of the frame profile, and the corner connector plug-in part can be a plurality of bumps or bosses 4;
the inner side wall 12, on which the bumps or the bosses 4 are distributed, of the plug-in cavity is a side wall containing a fiber fabric 6; and
the bumps or the bosses 4 are configured for inserting and fixing the toothed corner connector 3.

In this embodiment, the corner connector plug-in part is arranged on the inner side wall 12 of the plug-in cavity, which can realize the hidden arrangement of the corner connector plug-in part. However, it is worth noting that the corner connector plug-in part can also be arranged on the outer side wall of the plug-in cavity, which is also within the protection scope of the present invention.

The composite material frame profile of the present invention has the following beneficial effects: by use of the fiber fabric 6 in the present invention, the mechanical strength of the corner connector mounting area of the frame profile can be well enhanced, so that the mechanical strength of the bumps or the bosses 4 is enhanced, and the quick plug-in connection with the toothed corner connector 3 is realized.

In order to further optimize the implementation effect of the present invention, in some other embodiments, the remaining feature technology is the same, and the difference lies in that each bump or boss 4 includes a through hole 41 penetrating the inner side wall 12 of the plug-in cavity, and protruding thorns or flanges 42 distributed inwardly extending from the edge of the through hole 41.

The above preferred solution is adopted to prepare the bumps or the bosses 4 by punching, the preparation process is simple, and the fiber fabric 6 can reinforce the bumps or the bosses 4, and the through hole 41 will not crack during punching.

Further, on the basis of the above embodiment, the through hole 41 is a tapered hole, and the aperture size of the through hole 41 gradually decreases along the direction extending from the outer surface of the inner side wall 12 of the plug-in cavity to the inner surface thereof.

According to the above preferred solution, the through hole 41 of the tapered hole will not crack during punching.

Further, on the basis of the above embodiment, the inner cavity of the through hole 41 of each bump or boss 4 is filled with a resin block 5.

According to the above preferred solution, the resin is used to reinforce the bumps or the bosses 4 to improve the force-bearing effect.

Further, on the basis of the above embodiment, the surface of the protruding thorn or flange 42 may also be coated with a resin layer.

Further, on the basis of the above embodiment, fiber fabrics 6 are distributed inside the profile body 1 close to its outer surface.

The above preferred solution is adopted to increase the transverse mechanical strength of the profile body.

Further, on the basis of the above embodiment, a mounting edge 2 extending outward is provided on the bottom surface of the profile body 1, and a fiber fabric 6 is distributed along the length direction of the mounting edge 2 near the outer surface and a middle part of the mounting edge.

According to the above preferred solution, the fiber fabric is used to increase the transverse mechanical strength of the mounting edge.

Further, on the basis of the above embodiment, fiber fabrics 6 are distributed inside the inner side wall 12 of the plug-in cavity with the bumps or bosses 4 near its inner surface and outer surface.

The above preferred solution is adopted to further reinforce the bumps or the bosses 4.

Further, on the basis of the above embodiment, the fiber fabric 6 distributed in the inner side wall 12 of the plug-in cavity close to its inner surface extends to the middle part of the inside of the mounting edge 2 and is distributed along the length direction of the mounting edge 2.

According to the above preferred solution, a piece of fiber fabric can simultaneously reinforce the mounting edge 2 and the wall of the plug-in cavity. While simplifying the preparation process of the frame profile, the present invention improves the effect of reinforcing the mounting edge and the wall of the plug-in cavity.

In order to further optimize the implementation effect of the present invention, in some other embodiments, the remaining feature technology is the same, and the difference lies in that the fiber fabric is a glass fiber mat or a piece of glass fiber cloth.

According to the above preferred solution, the type of the fiber fabric 6 is selected according to the specific situation.

In order to further optimize the implementation effect of the present invention, in some other embodiments, the remaining feature technology is the same, and the difference lies in that the plurality of bumps or bosses 4 are distributed in a matrix form.

An embodiment of the present invention further discloses a solar energy module frame, and the frame includes composite material frame profiles disclosed in any of the above embodiments and toothed corner connectors 3, the toothed corner connector 3 is inserted into the plug-in cavity 11 of two adjacent frame profiles, and all or part of the bumps or the bosses 4 are arranged between two adjacent teeth of a toothed corner connector 3.

After the toothed corner connector 3 is inserted into the composite material frame profile, the pulling force of the toothed corner connector 3 and the composite material frame profile is greater than 150 N.

An embodiment of the present invention further discloses a manufacturing method for the solar energy module frame, and the method includes the following steps:
S1: a composite material pultrusion device is used to prepare a composite material frame profile containing fiber fabrics 6 on the side wall 12 of the plug-in cavity 11;
S2: a cutting device is used to cut the composite material frame profile to a suitable length;
S3: a punching device is used to punch a plurality of bumps or bosses 4 on the surface of the side wall 12 of the plug-in cavity in the corner connector mounting area of each section of the composite material frame profile;
S4: the method of dispensing or brushing is used to infiltrate the resin into the cavity of the through hole 41 of each bump or boss 4; and
S5: a toothed corner connector 3 is inserted between two adjacent composite material frame profiles, and all or part of the bumps or the bosses 4 are put between two adjacent teeth of the toothed corner connector 3 to form a group frame.

Further, each bump or boss 4 includes a through hole 41 penetrating the side wall 12 of the plug-in cavity, and protruding thorns or flanges 42 distributed inwardly extending from the edge of the through hole 41.

In order to further increase the mechanical strength of the bumps or the bosses 4, after the method of dispensing or brushing is used to infiltrate the resin into the cavity of the through hole 41 of each bump or boss 4, the resin flows to the surface of the protruding thorn or flange 42 to form a resin layer.

The composite material frame profile, the solar energy module frame and the manufacturing method therefor of the present invention have the following beneficial effects:
First, the bumps or the bosses 4 are prepared by punching, and the preparation process is simple;
second, the fiber fabric 6 can reinforce the bumps or the bosses 4, and the through hole 41 will not crack during punching; and
third, the protruding thorns or the flanges 42 are used to achieve quick fixation with the toothed corner connector 3, which is more convenient.

It is worth noting that the composite material profile disclosed in the present invention is not only suitable for solar frame profiles, and can also be applied to window frame profiles or door frame profiles.

The above embodiments are merely used for illustrating the technical concept and characteristics of the present invention, and are intended to enable those of ordinary skill in the art to understand and implement the content of the present invention, and thus may not limit the protection scope of the present invention. All equivalent changes or modifications made according to the spirit of the present invention should fall within the protection scope of the present invention.

## Claims

1. A composite material frame profile, comprising a profile body and a plug-in cavity that is arranged on the profile body and is configured for plug-in connection with a toothed corner connector, wherein
a corner connector plug-in part is arranged on the inner surface of the side wall of the plug-in cavity in a corner connector mounting area of the frame profile, and the corner connector plug-in part can be a plurality of bumps or bosses;
the side wall, on which the bumps or the bosses are distributed, of the plug-in cavity is a side wall containing fiber fabric; and
the bumps or the bosses are configured for inserting and fixing the toothed corner connector.

2. The composite material frame profile according to claim 1, wherein each of the bumps or bosses comprises a through hole penetrating the side wall of the plug-in cavity, and protruding thorns or flanges distributed inwardly extending from the edge of the through hole.

3. The composite material frame profile according to claim 2, wherein the through hole is a tapered hole, and the aperture size of the through hole gradually decreases along the direction extending from the outer surface of the side wall of the plug-in cavity to the inner surface thereof.

4. The composite material frame profile according to claim 2 or 3, wherein the inner cavity of the through hole of each bump or boss is filled with a resin block.

5. The composite material frame profile according to claim 1, wherein fiber fabrics are distributed inside the profile body close to its outer surface.

6. The composite material frame profile according to claim 1, wherein fiber fabrics are distributed inside the side wall of the plug-in cavity with the bumps or bosses near its inner surface.

7. The composite material frame profile according to claim 6, wherein a mounting edge extending outward is provided on the bottom surface of the profile body, and a fiber fabric is distributed along the length direction of the mounting edge near the outer surface and a middle part of the mounting edge.

8. The composite material frame profile according to claim 7, wherein the fiber fabric distributed in the wall of the plug-in cavity close to its inner surface extends to the middle part of the inside of the mounting edge and is distributed along the length direction of the mounting edge.

9. The composite material frame profile according to claim 8, wherein the fiber fabric is a glass fiber mat or a piece of glass fiber cloth.

10. A solar energy module frame, comprising composite material frame profiles according to any one of claims 1-9 and toothed corner connectors, the toothed corner connector is inserted into the plug-in cavity of two adjacent frame profiles, and all or part of the bumps or the bosses are arranged between two adjacent teeth of a toothed corner connector.

11. The solar module frame according to claim 10, wherein after the toothed corner connector is inserted into the composite material frame profile, the pulling force of the toothed corner connector and the composite material frame profile is greater than 150 N.

12. A manufacturing method for the solar energy module frame, comprising the following steps:
S1: using a composite material pultrusion device to prepare a composite material frame profile containing fiber fabrics on at least one side wall of the plug-in cavity;
S2: using a cutting device to cut the composite material frame profile to a suitable length;
S3: using a punching device to punch a plurality of bumps or bosses on the surface of the side wall of the plug-in cavity in the corner connector mounting area of each section of the composite material frame profile;
S4: using the method of dispensing or brushing to infiltrate the resin into the cavity of the through hole of each bump or boss; and
S5: inserting a toothed corner connector between two adjacent composite material frame profiles, and putting all or part of the bumps or the bosses between two adjacent teeth of the toothed corner connector to form a group frame.
